# EUROPEAN PATENT APPLICATION

(11) **EP 1 469 325 A2**
(43) Date of publication of application: **20.10.2004**
(21) Application number: 04004758.1
(22) Date of filing: 02.03.2004
(51) Int. Cl.: G02B 5/122, G02B 5/18, G06K 19/16

(54) **Retroreflector**

(30) Priority: 21.03.2003 DE 10312708
(71) Applicant: OVD Kinegram AG, 6301 Zug (CH)
(72) Inventor: Schilling, Andreas, Dr., 6332 Hagendorn (ZG) (CH); Tompkin, Wayne Robert, Dr., 5400 Baden (CH)
(74) Representative: Zinsinger, Norbert

(57) **Zusammenfassung**

Ein Schichtverbund (2) aus Kunststoff ist als ein Retroreflektor ausgebildet und umfasst wenigstens eine transparente Strukturschicht (3), eine Schutzschicht (4) und eine an einer gemeinsamen Grenzfläche zwischen der Strukturschicht (3) und der Schutzschicht (4) eingeschlossene Reflexionsschicht (6). In die Reflexionsschicht (6) ist eine von im wesentlichen identisch geformten dreidimensionalen Strukturelementen (9) gebildete Reliefstruktur (8) eingeformt. Die Strukturelemente (9) weisen an ihren Grundflächen laterale Ausdehnungen (D) im Bereich von 1 µm bis 100 µm auf. Mit der Reflexionsschicht (6) bedeckte Seitenflächen (10) schliessen mit einer freien Oberfläche (11) des Schichtverbunds (2) einen Neigungswinkel (ϑ) von 45° ein. Die Reliefstruktur (8) ist in wenigstens einem Flächenelement mit einer Mikrostruktur additiv überlagert. Die Mikrostruktur weist eine bevorzugte Richtung auf und beeinflusst die Qualität der Reflexionswirkung des Schichtverbunds (2). Der Retroreflektor ist für die Herstellung von maschinell lesbaren optischen Markierungen geeignet.

## Description

Die Erfindung bezieht sich auf einen Retroreflektor gemäss dem Oberbegriff des Anspruchs 1.

Retroreflektoren werden als Rückstrahler zum Markieren von Gegenständen und Personen verwendet, deren Oberfläche bzw. Kleidung Licht stark absorbiert und daher auch bei starker Beleuchtung in der Nacht schlecht sichtbar ist. Die Retroreflektoren sind mit in einem Schichtverbund eingeschlossenen Spiegelflächen versehen und werden z.B. auf vorbestimmten Flächen mittels Kleben angebracht. Die Retroreflektoren erhöhen die Sichtbarkeit von beispielsweise Bauabschrankungen, optischen Markierungen, Fahrrädern, Automobilen usw..

Die WO 00/43813 beschreibt einen Retroreflektor, der im wesentlichen der oben erwähnten US 3 712 706 entspricht. "Chips" bzw. kleine Abschnitte dieser Retroreflektoren können als "Pigment" einem Lack beigemischt werden. Ein Gegenstand, der mit einem solchen Lack überzogen ist, weist eine stark reflektierende Oberfläche auf.

Die US 1 671 086 lehrt, die reflektierenden Flächen des Retroreflektors mit der typischen "cube edge" - Struktur nicht zu stark zu polieren, damit das reflektierte Licht an den kleinen Unregelmässigkeiten in den reflektierenden Flächen des Retroreflektors gestreut werden. Das auf den Retroreflektor einfallende, parallele Lichtbündel wird reflektiert und kommt in einem Konus mit dem einfallenden Lichtbündel als Achse symmetrisch sich aufweitend zur Lichtquelle zurück.

Der in der DE 44 29 683 C1 beschriebene Tripelreflektor ist ein Körper, der aus Strukturelementen gebildet ist, von denen jede eine von drei reflektierenden quadratischen Flächen begrenzte Form aufweist. Die drei Flächen bilden eine Oberfläche, die der in der Richtung der Würfeldiagonalen sichtbaren Würfeloberfläche entspricht. Die drei Flächen jedes Strukturelements können hohlspiegelartig leicht eingewölbt sein und eine Riffelung aufweisen, damit der Tripelreflektor das einfallende, parallele Lichtbündel divergent zur Lichtquelle zurück reflektiert.

Aus der US 3 712 706 sind Retroreflektoren bekannt, deren Reliefstruktur sich aus spiegelnden Tetraeder-Elementen in Form von Würfelecken (corner cube) zusammensetzt. Die Herstellung der Reliefstruktur mit den periodisch angeordneten Tetraeder-Elementen erfolgt durch Einschneiden von drei Sätzen von parallelen, V-förmigen Furchen mittels eines Diamantwerkzeugs in die Oberfläche einer Metallmasterplatte. Die drei Sätze mit den parallelen, V-förmigen Furchen kreuzen sich unter vorbestimmten Winkeln derart, dass die Oberfläche der Metallmasterplatte die aus den periodisch angeordneten Tetraeder-Elementen gebildete Reliefstruktur aufweist. Derartige Retroreflektoren reflektieren einfallendes Licht in einen engen Raumwinkel, der um die Richtung des einfallenden Lichts zentriert ist. Eine Vergrösserung des Winkels des rückgestrahlten Lichts wird durch die Beugung des Lichts an der Reliefstruktur bewirkt.

Es ist auch aus der US 4 588 258 und der US 4 938 563 bekannt, dass das Abformen der Reliefstruktur eines Retroreflektors in ein biegsames Folienmaterial wegen der geringen Materialdicke notwendigerweise zu mikroskopisch kleinen lateralen Abmessungen der Elemente der Reliefstruktur und folglich zu starken Lichtbeugungseffekten führt. Geringe Asymmetrien in der Reliefstruktur, die die Achsen der Tetraeder-Elemente um wenige Winkelgrade aus der Normalenrichtung neigen, vermindern die Streuung des rückgestrahlten Lichts. Die US 4 938 563 weist auf die Möglichkeit der Beeinflussung der Divergenz bzw. Streuung des zurückgestrahlten Lichts durch geeignetes Anordnen der unterschiedlich asymmetrischen Tetraeder-Elemente innerhalb der Reliefstruktur hin.

Gemäss DE 696 19 691 T2 können die Retroreflektoren durch eine der Reliefstruktur überlagerte Beugungsstruktur, die dem rückgestrahlten Licht eine von der Spatialfrequenz der Beugungsstruktur abhängige Farbe ohne den Einsatz von Farbpigmenten verleiht, verbessert werden.

Materialien, die sich für die Herstellung von Schichtverbundmaterial für Retroreflektoren eignen, sind in der US 4,856,857 zusammengestellt.

Retroreflektoren sind im Handel leicht erhältlich. Den bekannten Retroreflektoren ist gemeinsam, dass aus dem rückgestrahlten Licht keine Rückschlüsse auf die Orientierung des Retroreflektors möglich sind.

Der Erfindung liegt die Aufgabe zugrunde, kostengünstige und effiziente Retroreflektoren mit neuartigen Strukturen zu schaffen, die von den Retroreflektoren rückgestrahltes Licht vorbestimmt modifizieren.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den weiteren Ansprüchen.

Ausführungsbeispiele der Erfindung sind in der Zeichnung dargestellt und werden im folgenden näher beschrieben.

Es zeigen:
- Figur 1: einen Retroreflektor im Querschnitt,
- Figur 2: einen vergrösserten Ausschnitt einer Reliefstruktur,
- Figur 3: eine Mattstruktur,
- Figur 4: ein Signal mit Retroreflektoren,
- Figur 5a: eine einfache Gitterstruktur des Retroreflektors,
- Figur 5b: eine Draufsicht auf die Gitterstruktur der Figur 5a,
- Figur 6a: einen Retroreflektor mit einer Pyramidenstruktur,
- Figur 6b: eine Draufsicht auf die Pyramidenstruktur der Figur 6a,
- Figur 7: ein Strukturelement mit Tetraederstruktur
- Figur 8: ein kegelförmiges Strukturelement und
- Figur 9: ein Anwendungsbeispiel für einen Retroreflektor

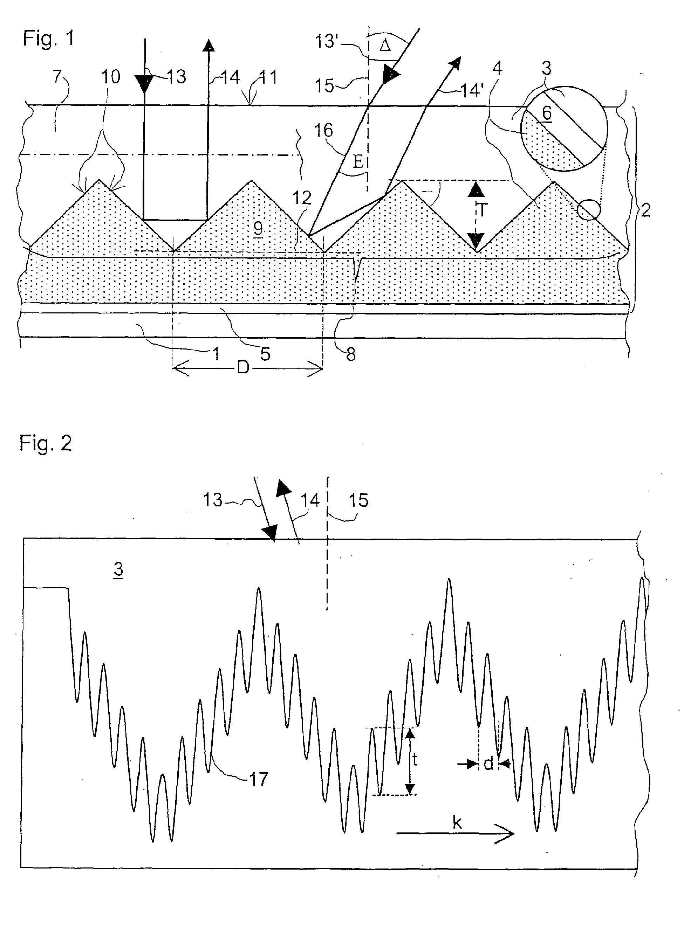

In der Figur 1 bedeuten 1 ein Substrat, 2 einen Schichtverbund, 3 eine transparente Strukturschicht, 4 eine Schutzschicht, 5 eine Klebeschicht und 6 eine Reflexionsschicht. Wenigstens die Strukturschicht 3, die Reflexionsschicht 6 und die Schutzschicht 4 bilden in der angegebenen Reihenfolge den Schichtverbund 2, wobei das Substrat 1 beispielsweise ein entfernbares Trägerband zum Schutz der ggf. auf der von der Strukturschicht 3 abgewandten Fläche der Schutzschicht 4 aufgebrachten Klebeschicht 5 oder ein mit den Schichtverbund 2 mittels der Klebeschicht 5 verbundener Gegenstand ist, auf den der Schichtverbund 2 appliziert ist. In einer Ausführung des Schichtverbunds 2 erstreckt sich eine zähe, transparente Basisfolie 7 über die Strukturschicht 3 und bildet eine weitere Schicht des Schichtverbunds 2. In einer andern Variante ist die Basisfolie 7 eine Laminierfolie, die so über den Gegenstand geklebt ist, dass der Schichtverbund 2 zwischen dem Gegenstand und der Laminierfolie eingeschlossen ist.

Die Reflexionsschicht 6 weist eine hohe Reflektivität auf, die durch eine auf die strukturierte Seite der Strukturschicht 3 aufgedampfte Metallschicht erzielt wird, wobei Aluminium, Silber, Chrom, Gold, Kupfer, Tellur usw. (siehe Tabelle 5 der US 4,856,857) und ggf. Legierungen aus diesen Metallen eine gute Reflektivität bei Schichtdicken im Bereich von 10 nm bis 150 nm erreichen. In einer speziellen Ausführung des Schichtverbunds 2 kann die Reflexionsschicht 6 aus einem der anorganischen transparenten Materialien bestehen, die in den Tabellen 1, 3 und 4 der US 4,856,857 aufgeführt sind, oder aus einem der aus der WO 99/47983 bekannten, transparenten Chalkogenide; vorzugsweise werden TiO₂, ZnS, SiO₂ usw. eingesetzt. Varianten der Reflexionsschicht 6 weisen anstelle einer uniformen Schicht ein Dünnfilmsystem auf. Beispiele hierfür sind Vielschichtsysteme aus den oben genannten anorganischen Dielektrika oder Kombinationen von metallischen und dielektrischen Schichten. Eine Ausführung des Schichtverbunds 2 mit einer transparenten Reflexionsschicht 6 besteht mit Vorteil nur aus transparenten Materialien, so dass eine unter dem Schichtverbund 2 befindliche Signalmarkierung sichtbar ist.

Die Grenzfläche zwischen der Strukturschicht 3 und der Schutzschicht 4 weist eine mit einer Feinstruktur überlagerte Reliefstruktur 8 auf, die vor dem Auftragen der Schutzschicht 4 in die Strukturschicht 3 abgeformt wurde. Die Reliefstruktur 8 besteht aus Strukturelementen 9, deren der Strukturschicht 3 zugewandte Seitenflächen 10 von der Reflexionsschicht 6 bedeckt sind. Grundflächen der Strukturelemente 9 bilden eine Basisebene 12, die parallel zur Oberfläche 11 in der Schutzschicht 4 angeordnet ist. In der Zeichnung der Figur 1 ist aus darstellerischen Gründen eines der Strukturelemente 9 mittels einer gestrichelten Linie, die die Lage der Basisebene 12 andeutet, abgegrenzt. Die Reliefstruktur 8 weist vorzugsweise eine Strukturtiefe T von 0.25 µm bis 100 µm auf. Die Spatialfrequenz der Reliefstruktur 8 ist im Vergleich zu derjenigen der Feinstruktur niedrig, wobei die Strukturelemente 9 in der Basisebene 12 eine laterale Ausdehnung D im Bereich von 0.5 µm bis 200 µm aufweisen. Die bevorzugten Werte von D liegen im Bereich von D = 1 µm bis D = 50 µm. Die Ausdehnung D und die Strukturtiefe T sind derart zu wählen, dass die mit der Reflexionsschicht 6 bedeckten Seitenflächen 10 gegen die Basisebene 12 geneigt sind und einen Neigungswinkel ϑ von 45° zur Basisebene 12 einschliessen; d.h. die Ausdehnung D ist das doppelte der Strukturtiefe T bzw. D = 2•T. In einer möglichen Ausführungsform der Reliefstruktur 8 sind die Strukturelemente 9 identisch.

Die oben genannte Basisfolie 7 schützt ggf. den Schichtverbund 2 gegen Beschädigungen durch von aussen einwirkende, mechanische Kräfte. Die Basisfolie 7 ist auf der von der Reliefstruktur 8 abgewandten Seite der Strukturschicht 3 angeordnet und fest mit der Strukturschicht 3 verbunden. Basisfolien aus Polyäthylentheraphtalat, Polycarbonat, Polypropylen usw. sind hochtransparent, abrieb- und zugfest. Sie schützen den Schichtverbund 2 bereits wirksam bei einer Schichtdicke der Basisfolie 7 von 10 µm. In der Zeichnung der Figur 1, links ist die Basisfolie 7 durch eine strich-punktierte Linie angedeutet. Die freiliegende Oberfläche 11 ist in dieser Ausführung die dem Schichtverbund 2 abgewandte Seite der Basisfolie 7.

Für die Strukturschicht 3 und die Schutzschicht 4 des Schichtverbunds 2 eignen sich beispielsweise Lacke auf der Basis von Polymethylmethacrylat. Speziell für Reliefstrukturen 8 mit grossen Strukturtiefen T sind UV-Lacke für die Strukturschicht 3 von Vorteil. Strahlungshärtende Lacke, z.B. UV-Lacke härten bei Einwirkung entsprechender Strahlung, beispielsweise Bestrahlung mit ultraviolettem Licht aus, wobei während des Härtungsprozesses die Reliefstruktur 8 in den noch teigigen UV-Lack der Strukturschicht 3 abgeformt wird. Rezepturen solcher Lacke sind aus der eingangs erwähnten US 4,856,857 bekannt. Ein Kaltkleber oder ein Heisskleber findet für die Klebeschicht 5 Verwendung. Geeignete Klebermaterialien sind in der US 4,856,857 ebenfalls aufgeführt.

Durch die Oberfläche 11 einfallendes Licht 13, 13' wird im Schichtverbund 2 an der Reflexionsschicht 6 reflektiert. Wegen des Neigungswinkels ϑ von 45° verlassen rückgestrahlte Lichtstrahlen 14, 14' den Schichtverbund 2 erst nach einer zweimaligen Reflexion parallel zur Richtung des einfallenden Lichts 13, 13'. Dies gilt für einen weiten Wertebereich eines zwischen der Richtung des einfallenden Lichts 13, 13' und einer auf die freie Oberfläche 11 des Schichtverbunds 2 ausgerichteten Normalen 15 gemessenen Einfallswinkels α. Die Werte für den Einfallswinkel α liegen im Bereich zwischen 0° bis ca. 75° und umfassen somit praktisch den gesamten Halbraum über dem Schichtverbund 2. Da die transparenten Kunststoffmaterialien der Strukturschicht 3 üblicherweise einen Brechungsindex von etwa n = 1.5 aufweisen, werden wegen der Refraktion die einfallenden Lichtstrahlen 13' zur Normalen 15 hin als gebrochene Lichtstrahlen 16 abgelenkt. Innerhalb des Schichtverbunds 2 beträgt der effektive Einfallswinkel β zwischen den gebrochenen Lichtstrahlen 16 und der Normalen 15 höchstens 45°. Da das einfallende Licht 13, 13' unabhängig vom Einfallswinkel α immer in die Richtung aus der das einfallende Licht 13, 13' kommt, zurückgeworfen wird, sind entsprechende Schichtverbunde 2 unter dem Namen Retroreflektor bekannt.

Bei einer Ausführungsform des Schichtverbunds 2 weisen die Strukturelemente 9 kleine laterale Abmessungen im Bereich von einigen 10 Mikrometern oder weniger auf. An den Strukturelementen 9 treten daher insbesondere bei der Beleuchtung mit kohärentem Licht unerwünschte Beugungseffekte auf. Mit Vorteil werden zur Unterdrückung dieser unerwünschten Beugungseffekte die Strukturelemente 9 mit kleinen lateralen Abmessungen nicht mehr exakt periodisch auf der Basisebene 12 angeordnet, sondern weisen eine quasi-zufällige Verteilung auf der Basisebene 12 auf. Zwischen den benachbarten Strukturelementen 9 können kleine reflektierende ebene Teilflächen der Basisebene 12 entstehen und/oder jeweils benachbarte Strukturelemente 9 zusammenrücken. Der kleine von den zusammengerückten Strukturelementen 9 gemeinsam belegte Volumenanteil der Strukturform weist praktisch die gleiche dreidimensionale Form der originalen Strukturelemente 9 auf. Die Reliefstruktur 8 ist daher aus im wesentlichen identischen Strukturelementen 9 zusammengesetzt.

In einer anderen Ausführung können die lokalen Werte der Strukturtiefe zufällig um einen mittleren Wert der Strukturtiefe T streuen, so dass die unerwünschten Beugungseffekte an den Strukturelementen 9 ebenfalls unterdrückt werden. Diese Massnahmen für die Reduktion der unerwünschten Beugungseffekte sind auch miteinander kombinierbar.

Die Figur 2 zeigt in einer vergrösserten, nicht massstäblichen Darstellung den Querschnitt durch den Schichtverbund 2 (Fig. 1) mit der gestrichelt gezeichneten Reliefstruktur 8. Die mit der Reflexionsschicht 6 (Fig. 1) bedeckten Seitenflächen 10 (Fig. 1) bilden die Grenzfläche zwischen der Strukturschicht 3 und der Schutzschicht 4. Die Seitenflächen 10 sind nicht glatt, sondern weisen eine lichtmodifizierende Feinstruktur auf. Die der Reliefstruktur 8, beispielsweise additiv, multiplikativ usw., überlagerte Feinstruktur ist eine mikroskopisch feine Mikrostruktur 17, die die Qualität der Reflexionswirkung des Schichtverbunds 2 beeinflusst. Die rückgestrahlten Lichtstrahlen 14, 14' (Fig. 1) werden durch die Reflexionswirkung der Mikrostruktur 17 verändert, beispielsweise in der Farbe, der Polarisation, der Divergenz usw..

In der Zeichnung der Figur 2 ist die Mikrostruktur 17 beispielsweise ein lineares Beugungsgitter mit einem sinusförmigen Profil. Das Beugungsgitter kann beispielsweise durch einen Gittervektor, eine Gitterperiode (bzw. Linienabstand) d von weniger als 500 nm und eine optisch wirksame Feinstrukturtiefe t von 20 nm bis 1000 nm charakterisiert werden. Die abzuformende geometrische Feinstrukturtiefe t_{G} ist entsprechend dem Brechungsindex n der die Mikrostruktur 17 ausfüllenden Strukturschicht 3 kleiner, also t_{G} = t/n. Der Brechungsindex n der Strukturschicht 3 liegt typischerweise im Bereich von n = 1,5 bis 1,6. Mit der Feinstrukturtiefe t ist im folgenden immer die optisch wirksame gemeint. Der Gittervektor, die bevorzugte Richtung k, des Beugungsgitters liegt in der Zeichnungsebene der Figur 2.

Neben dem sinusförmigen Profil eignen sich auch andere sinusähnliche oder rechteckförmige Profile für das die Mikrostruktur 17 bildende periodische, lineare Beugungsgitter bzw. Kreuzgitter.

Besonders vorteilhaft für die Überlagerung der Reliefstruktur 8 sind Mikrostrukturen 17, deren Beugungsgitter einen Wert der Gitterperiode d von weniger als 350 nm aufweisen. Diese Beugungsgitter beugen auch schief auf die Seitenflächen 10 auftreffendes, sichtbares einfallendes Licht 13 nur in die nullte Beugungsordnung, d.h. reflektieren wie ein Spiegel, und beeinflussen daher die Richtung der rückgestrahlten Lichtstrahlen 14 nicht. In Abhängigkeit von der Gitterperiode d kann das Beugungsgitter einzelne Bereiche im sichtbaren Spektrum des einfallenden Lichts 13 unterdrücken, so dass die gebeugten, rückgestrahlten Lichtstrahlen 14 eine Mischfarbe aufweisen, d.h. die Beugungsgitter wirken wie farbige, ebene Spiegel.

Mit Vorteil weist das Beugungsgitter mit der Gitterperiode d < 350 nm eine gut reflektierende metallische Schicht 6 auf, die z.B. aus Silber, Aluminium, Gold usw. oder aus einer Legierung mit einem der Metalle als Hauptkomponente besteht. Der Wert der Feinstrukturtiefe t wird zweckmässig aus dem Bereich von 50 nm bis 250 nm gewählt. In diesem Bereich der Feinstrukturtiefe t wirkt das Beugungsgitter als effektiver Polarisator bzw. als Analysator für polarisiert einfallendes Licht 13. Das TE polarisierte Licht wird in diesem Bereich der Feinstrukturtiefe t mit hoher Effizienz praktisch unabhängig von der Feinstrukturtiefe t gebeugt. Im Gegensatz dazu ist die Beugungseffizienz für das TM polarisierte Licht stark von der Feinstrukturtiefe t abhängig, wobei die Beugungseffizienz für das TM polarisierte Licht mit zunehmender Feinstrukturtiefe t schnell zu einem ersten Minimum absinkt. Die maximale Polarisationseffizienz liegt daher im Bereich der Feinstrukturtiefe t des ersten Minimums für die Beugungseffizienz des TM polarisierten Lichts. Die Richtung des unpolarisiert einfallenden Lichts 13 und die Normale 15 legen eine Beugungsebene, hier die Zeichnungsebene der Figur 2, fest. Liegt die bevorzugte Richtung k des Beugungsgitters in der Beugungsebene, so schwingt der elektrische Feldvektor des p - polarisierten Lichts parallel zu dieser Ebene als TE polarisiertes Licht und wird vom Beugungsgitter mit grosser Beugungseffizienz reflektiert. Der elektrische Feldvektor des s - polarisierten Lichts, das senkrecht zur Beugungsebene schwingt, wird als TM polarisiertes Licht mit geringer Beugungseffizienz gebeugt, d.h. praktisch absorbiert. Die gebeugt reflektierten Lichtstrahlen 14 sind daher linear polarisiert, d.h. das Beugungsgitter der Mikrostruktur 17 wirkt als Polarisator bzw. für das polarisiert einfallende Licht 13 als Analysator.

In einer möglichen Ausführungsform weist das Beugungsgitter die Gitterperiode d = 300 nm, ein sinusförmiges Profil und eine Reflexionsschicht 6 aus Aluminium auf. Die maximale Polarisationseffizienz bzw. das Minimum der Beugungseffizienz für das TM polarisierte Licht liegt im bevorzugten Bereich der Feinstrukturtiefe von t = 100 nm bis t = 150 nm für mit dem effektiven Einfallswinkel β < |45°| auf das Beugungsgitter auftreffende Lichtstrahlen 16 (Fig. 1), die Wellenlängen im Bereich von 550 nm besitzen.

Ist das Beugungsgitter um 90° um die Normale 15 gedreht, so dass die bevorzugte Richtung k senkrecht zur Zeichnungsebene der Figur 2 ausgerichtet ist, wird vom Beugungsgitter, immer bezogen auf die Beugungsebene, das p - polarisierte Licht absorbiert und s - polarisierte Licht gebeugt.

Der Vorteil des Polarisationsvermögens des Retroreflektors ist darin zu sehen, dass anhand der Polarisierung der vom Retroreflektor rückgestreuten Lichtstrahlen 14 die Orientierung des Retroreflektors bzw. die bevorzugte Richtung k der Mikrostruktur 17 aus grosser Entfernung feststellbar ist.

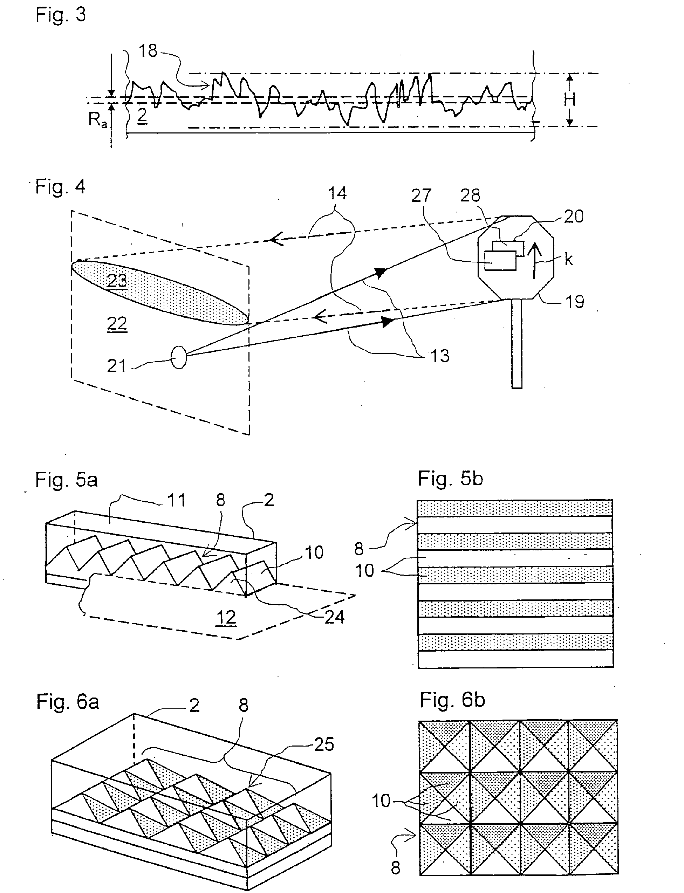

In der Figur 3 ist eine als Mikrostruktur 17 (Fig. 2) verwendbare Mattstruktur 18 gezeigt. Mikroskopisch feine Reliefstrukturelemente sind in der Mattstruktur 18 zufällig verteilt, weshalb die Mattstruktur 18 nur durch statistische Kenngrössen, wie z.B. Mittenrauhwert Rₐ, Korrelationslänge I_{c} usw., beschrieben werden kann. Die mikroskopisch feinen Reliefstrukturelemente der Mattstruktur 18 bestimmen das Streuvermögen. Die Kenngrösse Mittenrauhwert Rₐ liegt im Bereich 20 nm bis 5.000 nm mit Vorzugswerten von 50 nm bis 1.000 nm und entspricht der optisch wirksamen Feinstrukturtiefe t des Beugungsgitters. Grösste Höhenunterschiede H innerhalb der Mattstruktur 18 betragen ein Mehrfaches des Mittenrauhwerts Rₐ. Die Kenngrösse Korrelationslänge I_{c} weist wenigstens in einer Richtung Werte im Bereich von 200 nm bis 50.000 nm, vorzugsweise zwischen 500 nm bis 10.000 nm, auf. Weisen die mikroskopisch feinen Reliefstrukturelemente keine azimutale Vorzugsrichtung auf, handelt es sich um eine sogenannte isotrope Mattstruktur 18. Das auf die isotrope Mattstruktur 18 einfallende Licht 13 wird in einem durch das Streuvermögen der Mattstruktur 18 vorbestimmten, um die Achse des einfallenden Lichts 13 zentrierten Raumwinkel reflektiert. Die Intensität des gestreuten Lichts nimmt von der Achse des Raumwinkels gleichmässig in allen Richtungen ab. Die Öffnung des Raumwinkels ist durch einen durch die visuelle oder maschinelle Erkennbarkeit vorbestimmten Grenzwert der Intensität bestimmt. Stark streuende Mattstrukturen 18 verteilen das gestreute Licht in einen grösseren Raumwinkel als eine schwach streuende Mattstruktur 18. Sind die mikroskopisch feinen Reliefstrukturelemente im Mittel auf eine bevorzugte Richtung k azimutal ausgerichtet, streut die Mattstruktur 18 das einfallende Licht anisotrop, wobei der vorbestimmte Raumwinkel der Mattstruktur 18 als Querschnitt eine Ellipsenform besitzt, deren grosse Hauptachse senkrecht zur bevorzugten Richtung k der Reliefstrukturelemente weist. Im Gegensatz zu den diffraktiven Strukturen streuen die Mattstrukturen 18 das einfallende Licht 13 praktisch unabhängig von dessen Wellenlänge.

Die Ausführungsform des Retroreflektors, dessen der Reliefstruktur 8 überlagerte Mikrostruktur 17 eine der Mattstrukturen 18 ist, weist mit Vorteil eine durch das Streuvermögen bestimmte, erhöhte Divergenz der vom Retroreflektor rückgestreuten Lichtstrahlen 14 (Fig. 2) auf. Zudem wird die Lichtintensität im Raumwinkel der rückgestrahlten Lichtstrahlen 14 ausgemittelt und es werden allfällige Beugungseffekte unterdrückt. Diese Eigenschaften sind besonders von Vorteil, wenn das einfallende Licht 13 (Fig. 2) einfarbig ist oder wenn der Retroreflektor für Strassenmarkierungen oder Verkehrszeichen eingesetzt ist.

In der Variante gemäss der Figur 4 weist der Retroreflektor auf der Frontseite eines Verkehrszeichens für die Überlagerung der Reliefstruktur 8 mit Vorteil Flächenelemente 27, 28 mit anisotropen Mattstrukturen 18 (Fig. 3) als Mikrostruktur 17 (Fig. 2) auf, wobei deren bevorzugte Richtung k vertikal im von den Flächenelementen 27, 28 gebildeten Bildmuster 20, z.B. eines Verkehrssignals 19, eines Firmenschilds usw. ausgerichtet ist. Das Material der Strukturschicht 3 (Fig. 1) und/oder der Basisfolie 7 (Fig. 1) wirkt als Farbfilter und ist transparent. Der Farbfilter der Flächenelemente 27, 28 ist entsprechend der Farben für das Bildmusters 20 des Verkehrssignals 19 gewählt. Das von einer Lichtquelle 21, z.B. von einem Fahrzeugscheinwerfer, erzeugte einfallende Licht 13 wird vom Retroreflektor in dem durch die Mattstruktur 18 vorbestimmten Raumwinkel zurückgeworfen. Die Intensität der reflektierten Lichtstrahlen 14 konzentriert sich in einer horizontalen Ellipse 23, die in einer gedachten Ebene 22, die am Ort der Lichtquelle und senkrecht zu den reflektierten Lichtstrahlen 14 angeordnet ist, den Querschnitt des Raumwinkels der reflektierten Lichtstrahlen 14 zeigt. Für Verkehrsteilnehmer sind solche Verkehrssignale 19 bei Dunkelheit im Licht 13 ihrer Lichtquellen 21 optimal sichtbar.

In einer anderen Ausführungsmöglichkeit des Schichtverbunds 2 (Fig. 1) ist die der Reliefstruktur 8 überlagerte Mikrostruktur 17 eine Überlagerung aus einem periodischen Beugungsgitter und einer der Mattstrukturen 18. Diese Ausführung des Retroreflektors weist den Vorteil auf, dass sie sowohl das Polarisationsvermögen des Beugungsgitters als auch die Vorteile der oben beschriebenen Mattstrukturen vereint. Das Streuvermögen der Mattstruktur 18 beeinflusst die Polarisation der rückgestrahlten Lichtstrahlen 14 nicht oder nur sehr schwach.

Die Figur 5a zeigt in der Ansicht einen Ausschnitt aus dem Schichtverbund 2 mit einer einfachen Ausführung der Reliefstruktur 8 in Form eines linearen Gitters. Das Gitter weist ein symmetrisches Sägezahnprofil auf, dessen Furchen mit den senkrecht zueinander angeordneten Seitenwänden 10 V-förmig sind. Die Mikrostruktur 17 (Fig. 2) ist zu fein, um in der Darstellung der Figur 5a sichtbar zu sein. In der Figur 5b ist die Draufsicht auf die Reliefstruktur 8 dargestellt. Die mit einem Punktraster markierten Seitenflächen 10, sind die in der Figur 5a nicht gezeigten Seitenflächen. Die Strukturelemente 9 (Fig. 1) sind Prismen mit einem gleichschenkeligen, rechtwinkligen Dreieck als Deckfläche 24. Die Prismen liegen mit ihrer Hypotenusenfläche auf der gedachten Basisebene 12, die zur Oberfläche 11 des Schichtverbunds 2 parallel ausgerichtet ist.

Figur 6a zeigt eine andere Ausführungsmöglichkeit der Reliefstruktur 8 im Schichtverbund 2. Wiederum ist die Mikrostruktur 17 (Fig. 2) nicht darstellbar. Die Reliefstruktur 8 ist eine Überlagerung von wenigstens zwei linearen Gittern, die ein Kreuzgitter bilden. Die linearen Gitter weisen das oben beschriebene symmetrische Sägezahnprofil auf. Die auf der Basisebene 12 (Fig. 4a) angeordneten Strukturelemente 9 (Fig. 1) sind Pyramiden 25. Kreuzen sich nur zwei lineare Gitter unter einem rechten Winkel, weisen die Pyramiden 25 eine quadratische Grundfläche in der Basisebene 12 auf, wie dies in der Figur 6b in der Draufsicht auf die Reliefstruktur 8 dargestellt ist. In der Zeichnung der Figur 6b sind die vier Seitenflächen 10 jeder Pyramide 25 (Fig. 6a) mittels Punktrastern von verschiedener Dichte voneinander unterschieden. Der Neigungswinkel ϑ (Fig. 1) der Seitenflächen 10 gegen die Basisfläche 12 beträgt 45°.

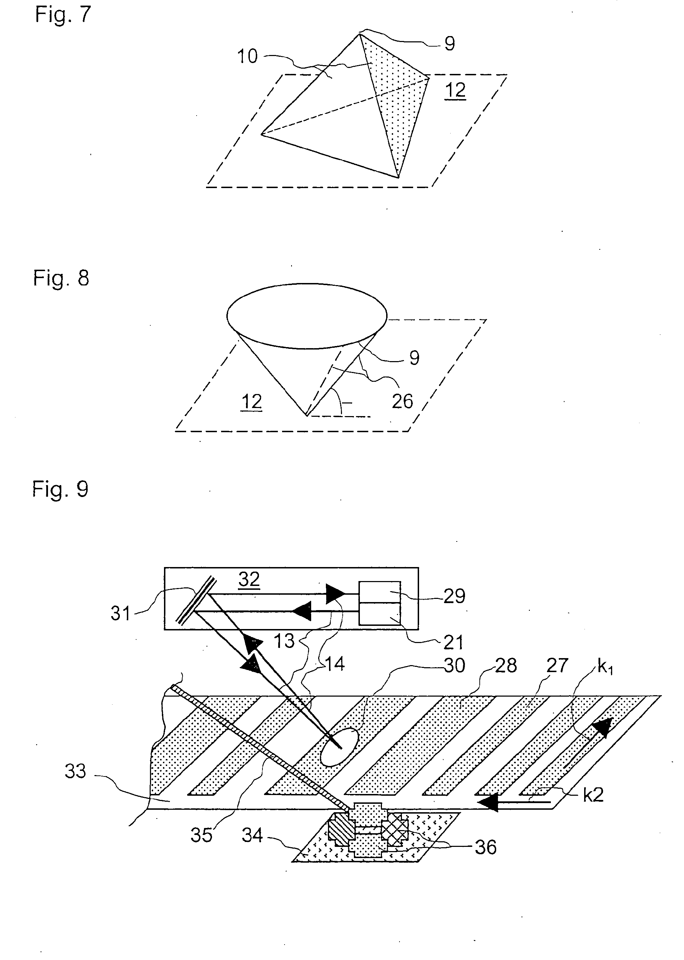

In der Figur 7 ist das Strukturelement 9 einer anderen Ausführungsform der Reliefstruktur 8 (Fig. 6b) gezeigt. Die Reliefstruktur 8 ist durch den Schnitt von drei linearen Gittern mit symmetrischem Sägezahnprofil erzeugt. Die Strukturelemente 9 weisen in diesem Fall die Form eines Tetraeders auf, dessen Grundfläche in der Basisebene 12 liegt. In der bevorzugten Ausführung schneiden sich die Furchen der drei Gitter unter einem Winkel von 60°, so dass die Grundfläche des Tetraeders ein gleichseitiges Dreieck bildet. Der Neigungswinkel ϑ (Fig. 1) der Seitenflächen 10 gegen die Basisfläche 12 beträgt 45°.

Für die Reliefstruktur 8 sind weitere Strukturelemente 9 geeignet, beispielsweise Pyramiden 20 (Fig. 5a), deren Grundfläche durch ein regelmässiges Vieleck begrenzt ist.

Die Spitzen 10 der in den Zeichnungen der Figuren 5 bis 7 dargestellten Strukturelemente 9 zeigen alle gegen die Oberfläche 11 (Fig. 5a). Die gleiche Wirkung erzielt der Negativabdruck dieser Strukturelemente 9, bei dem die Spitzen der Strukturelemente 9 auf der Basisebene 12 stehen. Von der Oberfläche 11 gesehen, sind die Strukturelemente 9 trichterartige Gebilde.

Ein Spezialfall ist das in der Figur 8 dargestellte Strukturelement 9 in der Form eines mit der Spitze senkrecht auf der Basisebene 12 stehenden, geraden Kreiskegels mit dem Öffnungswinkel 90°. Die Seitenflächen 10 (Fig. 7) des Strukturelements 9 sind zu Mantellinien 21 degeneriert. Bei dem für den Retroreflektor geeigneten Kegel schliessen alle Mantellinien 26 zur Basisebene 12 den Neigungswinkel ϑ = 45° ein.

In der Figur 9 ist eine Ausführungsmöglichkeit des Retroreflektors in der Form einer maschinell lesbaren, optisch kodierten Markierung gezeigt, die in vorteilhafter Weise die Polarisation der Mikrostruktur 17 (Fig. 2) ausnutzt. Der Retroreflektor ist in nebeneinander angeordnete Flächenelemente 27, 28 aufgeteilt. Die jeweils der Reliefstruktur 8 (Fig. 1) überlagerten Mikrostrukturen 17 der benachbarten Flächenelemente 27, 28 wirken als Polarisatoren und unterscheiden sich nur durch ihre bevorzugte Richtung k₁ bzw. k₂. Die Identifizierung des mit dem einfallenden Licht 13 angestrahlten Flächenelements 27, 28 erfolgt allein aufgrund der Polarisationsrichtung der rückgestrahlten Lichtstrahlen 14. Die rückgestrahlten Lichtstrahlen 14 kehren fast parallel zum einfallenden Licht 13 zur Lichtquelle 21 zurück und werden von einer unmittelbar neben der Lichtquelle 21 angeordneten Detektoranordnung 29 empfangen. Die Detektoranordnung 29 ist dazu ausgerüstet, die Polarisationsrichtung der rückgestrahlten Lichtstrahlen 14 zu bestimmen, beispielsweise mit vor Detektorelementen angeordneten Polarisationsfiltern als Analysatoren. Die Lichtquelle 21 erzeugt mit dem einfallenden Licht 13 auf den Flächenelementen 27, 28 einen Lichtfleck 30. Eine Ablenkeinrichtung 31, z.B. ein rotierender oder wippender Spiegel, lenkt das Bündel des einfallenden Lichts 13 ab, das mit dem Lichtfleck 30 die Flächenelemente 27, 28 nacheinander abtastet. Da die rückgestrahlten Lichtstrahlen 14 zum einfallenden Lichts 13 fast parallel ausgerichtet sind, wirft die Ablenkeinrichtung 31 die Lichtstrahlen 14 zur Detektoreinrichtung 29. Die zulässige Ablesedistanz hängt von der Parallelität des von der Lichtquelle 21 im Bündel einfallenden Lichts 13 ab, dessen Lichtfleck 30 eine Abmessung aufweist, die höchstens der kleinsten Abmessung der Flächenelemente 27, 28 entspricht. Die Detektoranordnung 29 erfasst wenigstens in einem Augenblick die rückgestrahlten Lichtstrahlen 14, wenn sich der Lichtfleck 30 vollständig innerhalb eines der Flächenelemente 27, 28 befindet. Die optisch kodierte Markierung des Retroreflektors mit den polarisierenden Mikrostrukturen 17 weist den Vorteil auf, dass die optische Markierung über eine Distanz von einigen Metern maschinell, typisch bis zu 10 m, von einer kompakten, aus der Lichtquelle 21, der Detektoranordnung 29 und dem Spiegel der Ablenkeinrichtung 31 bestehenden Einrichtung 32 ablesbar ist und die Polarisation der rückgestrahlten Lichtstrahlen 14 vor dem Hintergrund der Umgebung erkannt wird. Im Vergleich dazu können die bekannten optisch kodierten Markierungen aus Distanzen von höchstens einigen Zentimetern abgelesen werden.

In einer Variante kann die maschinenlesbare, optisch kodierte Markierung die Form eines Strichcodes aufweisen und im Schichtverbund 2 untergebracht sein. Der Strichcode weist z.B. parallel angeordnete, rechteckförmige Flächenelemente 27, 28 als Strichelemente auf, die zueinander beabstandet in einem Hintergrundfeld 33 angeordnet sind, wobei eine Information in verschieden breiten Strichelementen und im Abstand der benachbarten Flächenelementen 27, 28 kodiert ist. Die mit der Mikrostruktur 17 überlagerte Reliefstrukturen 8 der Flächenelemente 27, 28 und des Hintergrundfelds 33 unterscheiden sich in der bevorzugten Richtung k₁, k₂ der Mikrostruktur 17, wobei die bevorzugte Richtung k₁ für die Flächenelemente 27, 28 und die bevorzugte Richtung k₂ des Hintergrundfelds 33 einen Azimutwinkel aus dem Bereich von 30° bis 90° einschliessen. Dieser Strichcode ist über eine grosse Distanz maschinell ablesbar, insbesondere mit parallelem kohärentem Laserlicht.

Für die Anwendung der maschinenlesbaren, optisch kodierten Markierung wird mit Vorteil die der Reliefstruktur 8 überlagerte Mikrostruktur 17 eingesetzt, die ihrerseits das mit einer der Mattstrukturen 18 (Fig. 3) überlagerte periodische Beugungsgitter ist. Die Mattstruktur 18 unterdrückt die Beugungseffekte an der Reliefstruktur 8 und bestimmt den Raumwinkel der rückgestrahlten Lichtstrahlen 14 sowie dessen Querschnitt.

Die Flächenelemente 27, 28, das Hintergrundfeld 33 und ein Feld 34 mit vorbestimmt ausgerichteten Retroreflektoren eignen sich auch für eine Komposition von Sicherheitsmustern für optisch variable Sicherheitselemente, die mosaikartig aus mit diffraktiven Gittern belegten Flächenteilen 35, 36 zusammengesetzt sind und die auf Banknoten und anderen Dokumenten aller Art im Einsatz sind. Solche diffraktive Sicherheitselemente sind in der EP-A 0 105 099, EP-A 0 375 833 usw. beschrieben. Die mit der Reflexionsschicht 6 (Fig. 1) überzogenen Strukturen der diffraktiven Gitter sind benachbart zu Gebieten mit den Retroreflektoren in die Parallelebene 12 (Fig. 1) eingeformt und zwischen den Schichten 3 (Fig. 1) und 4 (Fig. 1) des Schichtverbund 2 (Fig. 1) eingeschlossen. Die Flächenteile 35, 36 unterscheiden sich von den jeweils benachbarten Flächenbereichen durch wenigstens einen ihrer Gitterparameter, wie Spatialfrequenz, Gittervektor, Gitterprofil usw. Für einen hier nicht gezeigten Beobachter sind die mit Retroreflektoren belegten Flächenelemente 27, 28, das Hintergrundfeld 33 und das Feld 34 nur als helle Fläche sichtbar, wenn das Licht ungefähr parallel zur Blickrichtung des Beobachters auf das Sicherheitselement einfällt, die Flächenteile 35, 36 mit den diffraktiven Gittern sind dunkel. Umgekehrt bleiben im Gegenlicht die Flächen 27, 28, 33, 34 mit den Retroreflektoren dunkel, während die Flächenteile 35, 36 entsprechend der Orientierung ihrer Gittervektoren und ihrer Spatialfrequenz hell aufleuchten, wenn das Sicherheitselement in seiner Ebene gedreht wird.

In einer Ausführungsform des Sicherheitsmusters sind z.B. die Flächenteile 35, 36 auf dem als Hintergrund dienenden Feld 34 angeordnet, während in einer anderen Ausführung die oben beschriebene optisch kodierte Markierung mit den Flächenelementen 27, 28 und optional mit dem Hintergrundfeld 33 in das Sicherheitselement integriert ist, wobei sich die linienförmige Flächenteile 35 mit einer Breite von höchstens 0,2 mm auch über die Flächenelemente 27, 28 und das Hintergrundfeld 33 erstrecken können. Diese Kombination weist den Vorteil auf, dass die optisch kodierte Markierung optimal an das maschinelle Ablesen angepasst ist, für den Beobachter jedoch visuell nicht erkennbar ist.

In einer weiteren Ausführung der optischen Markierung kann auch das Hintergrundfeld 33 anstelle des Retroreflektors ein diffraktives Gitter des Sicherheitselements aufweisen.

## Patentansprüche

1. Retroreflektor aus einem Kunststoff - Schichtverbund (2) mit wenigstens einer transparenten Strukturschicht (3), einer Schutzschicht (4) und einer an einer gemeinsamen Grenzfläche zwischen der Strukturschicht (3) und der Schutzschicht (4) eingeschlossenen Reflexionsschicht (6), wobei die Reflexionsschicht (6) eine von im wesentlichen identisch geformten dreidimensionalen Strukturelementen (9) gebildeten Reliefstruktur (8) aufweist, deren Grundflächen laterale Ausdehnungen (D) im Bereich von 1 µm bis 200 µm besitzen und deren mit der Reflexionsschicht (6) bedeckten Seitenflächen (10) einen Neigungswinkel (ϑ) von 45° zu einer freien Oberfläche (11) des Schichtverbunds (2) einschliessen,
**dadurch gekennzeichnet,**
**dass** die Reliefstruktur (8) in wenigstens einem Flächenelement (22; 23; 27; 28; 33; 34) mit einer durch eine Vorzugsrichtung ausgezeichneten Mikrostruktur (17) überlagert ist und **dass** zum Beeinflussen der Qualität der Reflexionswirkung des Schichtverbunds (2) die Mikrostruktur (17) in jedem_Flächenelement (22; 23; 27; 28; 33; 34) eine einzige bevorzugte Richtung (k; k₁; k₂) aufweist.

2. Retroreflektor nach Anspruch 1, **dadurch gekennzeichnet, dass** eine Basisfolie (7) aus einem transparenten, abrieb- und zugfesten Kunststoffmaterial mit der von der Reflexionsschicht (6) abgewandten Seite der Strukturschicht (3) verbunden ist.

3. Retroreflektor nach Anspruch 1 oder 2, **dadurch gekennzeichnet, dass** die Strukturelemente (9) nicht periodisch angeordnet sind.

4. Retroreflektor nach einem der Ansprüche 1 bis 3, **dadurch gekennzeichnet, dass** die Reflexionsschicht (6) metallisch ist.

5. Retroreflektor nach einem der Ansprüche 1 bis 4, **dadurch gekennzeichnet, dass** die Mikrostruktur (17) ein lineares Beugungsgitter mit der bevorzugten Richtung (k) ist sowie eine Gitterperiode (d) kürzer als 500 nm und eine optisch wirksame Feinstrukturtiefe (t) einen Wert aus dem Bereich von 20 nm bis 1'000 nm aufweist.

6. Retroreflektor nach Anspruch 5, **dadurch gekennzeichnet, dass** für eine maximale Polarisationseffizienz des Beugungsgitters die Gitterperiode (d) kürzer als 350 nm ist, dass die Feinstrukturtiefe (t) auf den Bereich 100 nm bis 150 nm beschränkt ist.

7. Retroreflektor nach Anspruch 5 oder 6, **dadurch gekennzeichnet, dass** die Reflexionsschicht (6) aus einem elektrisch gut leitenden Metall, insbesondere Silber, Aluminium, Gold oder aus einer Legierung mit einem dieser Metalle als Hauptkomponente, besteht.

8. Retroreflektor nach einem der Ansprüche 5 bis 7, **dadurch gekennzeichnet, dass** das Beugungsgitter mit einer Mattstruktur überlagert ist.

9. Retroreflektor nach einem der Ansprüche 1 bis 4, **dadurch gekennzeichnet, dass** die Mikrostruktur (17) eine anisotrope Mattstruktur (18) mit der bevorzugten Richtung (k; k₁; k₂) ist.

10. Retroreflektor nach Anspruch 8 oder 9, **dadurch gekennzeichnet, dass** die Mattstruktur (18) einen Mittenrauhwert (Rₐ) im Bereich 50 nm bis 1'000 nm und eine Korrelationslänge (I_{c}) von 500 nm bis 10'000 nm aufweist.

11. Retroreflektor nach einem der Ansprüche 1 bis 10, **dadurch gekennzeichnet, dass** eine Fläche des Schichtverbunds (2) in die Flächenelemente (27; 28) und in das Hintergrundfeld (33) eingeteilt ist und dass sich die Mikrostrukturen (17) in den Flächenelementen (27; 28) und im Hintergrundfeld (33) nur im Azimutwert der bevorzugten Richtungen (k₁; k₂) unterscheiden.

12. Retroreflektor nach Anspruch 11, **dadurch gekennzeichnet, dass** die Flächenelemente (27; 28) auf dem Hintergrundfeld (33) eine maschinell lesbare optische Markierung in Form eines Strichkodes bilden, wobei die Flächenelemente (27; 28) die bevorzugte Richtung (k₁) und das Hintergrundfeld (33) die bevorzugte Richtung (k₂) aufweisen und **dass** sich die bevorzugten Richtungen (k₁; k₂) um den Azimutwert aus dem Bereich 30° bis 90° unterscheiden.

13. Retroreflektor nach einem der Ansprüche 5 bis 10, **dadurch gekennzeichnet, dass** eine Fläche des Schichtverbunds (2) in die Flächenelemente (27; 28) eines Bildmusters (20) eingeteilt ist, **dass** die bevorzugte Richtungen (k; k₁; k₂) der für die Mikrostruktur (17) eingesetzten Mattstrukturen (18) in den Flächenelementen (27; 28) gleich ausgerichtet sind und dass sich die Flächenelemente (27; 28) nur in der Farbe der transparenten Strukturschicht (3) und/oder einer mit der von der Reflexionsschicht (6) abgewandten Seite der Strukturschicht (3) verbundenen transparenten Basisfolie (7) unterscheiden.

14. Retroreflektor nach einem der Ansprüche 1 bis 13, **dadurch gekennzeichnet, dass** wenigstens ein von der Reliefstruktur (8) freier Flächenteil (35; 36) mit einem optisch diffraktiven Gitter belegt ist und benachbart zu den mit den Mikrostrukturen (17) überlagerten Reliefstrukturen (8) belegten Flächenelementen (27; 28; 33; 34) angeordnet ist.

15. Retroreflektor nach Anspruch 14, **dadurch gekennzeichnet, dass** sich die Gitter benachbarter Flächenteile (35; 36) in wenigstens einem der Gitterparameter unterscheiden.

16. Retroreflektor nach Anspruch 14 oder 15, **dadurch gekennzeichnet, dass** sich wenigstens ein Flächenteil (35; 36) mit einer Breite im Bereich von 0,02 bis 0,2 mm über wenigstens eines aus der aus den Flächenelementen (27; 28), dem Hintergrundfeld (33) und dem Feld (34) gebildeten Gruppe erstreckt.

17. Retroreflektor nach einem der Ansprüche 1 bis 16, **dadurch gekennzeichnet, dass** die Schutzschicht (4) auf der von der Strukturschicht (3) abgewandten Fläche eine Klebeschicht (6) zum Verbinden des Schichtverbunds (2) mit einem Substrat (1) aufweist.
